# EUROPEAN PATENT SPECIFICATION

(11) **EP 0 812 535 B1**
(45) Date of publication and mention of the grant of the patent: **21.11.2001**
(21) Application number: 97201351.0
(22) Date of filing: 06.05.1997
(51) Int. Cl.: A01K 1/10, A01K 5/02

(54) **A construction for milking animals, such as cows**
Konstruktion zum Melken von Tieren, sowie Kühen
Construction pour la traite d'animaux, tels que des vaches

(30) Priority: 21.05.1996 NL 1003176
(43) Date of publication of application: 17.12.1997
(60) Divisional application: 01201696.0
(73) Proprietor: MAASLAND N.V., 3155 PD Maasland (NL)
(72) Inventor: van der Lely, Cornelis, 6300 Zug (CH)
(74) Representative: Corten, Maurice Jean F.M.

(56) References cited:
- EP-A- 0 619 068
- EP-A- 0 627 160
- WO-A-96/05723
- US-A- 3 620 192

## Description

The present invention relates to a construction for milking animals, such as cows, said construction including at least one milking machine, e.g. as known from W096-05723. When the animals are staying in a stable or shed, usually a loose house, in which there is also arranged a milking machine, the farmer will have to bring to this shed fodder. Under bad climatic circumstances, this is experienced as a serious disadvantage. Moreover, the farmer will often have to distribute himself the fodder over feed troughs accessible to the cows. This operation will have to be executed manually or with the aid of simple means. In order to obviate drawbacks of the prior art, and to promote a good condition of health of the animals, the invention is as according to claim 1. In order to promote a good condition of health of the animals, it will be possible to add fodder additives to their forage. Hence, in accordance with the invention, one or more silos for fodder additives are arranged on the feeding barrier or near thereto. In particular there may be provided several silos for different fodder additives. These fodder additives may consist of concentrate, such as biks, and/or minerals and/or vitamins, etc. In particular when different fodder additives have to be dispensed, it is important that there are provided mixing elements, connected to one or several silos for these fodder additives and disposed on the feeding barrier, for adding different kinds of fodder additives in specific amounts and in a desired mutual proportion to the fodder. The fodder additives may be added to the fodder in one or more feed troughs disposed near the feeding barrier.

The silo in accordance with the invention may be connected to the shed, said silo preferably constitutes part of the shed for the animals. Even without the use of a feeding barrier, it will be of advantage, when the silo constitutes part of the shed. This advantage will in particular be experienced in wintertime, especially when the forage is affected. When the silo constitutes part of the shed, there will occur fewer symptons of frost in the forage.

For the purpose of further facilitating the feeding of the animals, the shed for the animals comprises a feeding section adjacent to the silo, from which feeding section the animals can take fodder. In order to have the animals rest for ruminating after taking fodder, the shed for the animals comprises a resting section provided with cubicles, the feeding section being accessible from the resting section via a milk box in which the milking machine, in particular an automatic milking machine including a milking robot, is arranged. After the period of ruminating, the animals will again be enabled to take forage after first having passed the milk box and having been milked there. In a shed in which there are provided separate sections for resting and feeding it must remain possible, that one section is accessible for the animals from the other section. Hence, in according with the invention, there are provided one or more one-way passages. Insofar as these passages lead from the resting section to the feeding section, they may pass via the milk box.

Although it is possible to dispose pushing means for the forage, which pushing means move the fodder to the feeding barrier, it may be advantageous when the feeding barrier is moved itself. For that purpose the feeding barrier is provided with drive means for moving same in two opposite directions, transversely to the longitudinal direction of the feeding barrier. In this manner the feeding barrier can be pushed against or the stacked fodder, so that the forage is easily accessible for the animals. In a concrete embodiment in accordance with the invention, the feeding barrier is movable over a rail and the drive means for the feeding barrier are constituted by a step motor and a screw spindle driven thereby.

An embodiment in which the feeding barrier is movable in the direction of the stored fodder makes it possible to provide the feeding barrier with cutting members for cutting slices of fodder from packs of fodder stacked behind the feeding barrier. In particular when the packs of fodder are stacked relatively highly, it will be advantageous when there are provided several cutting members disposed above each other, while a cutting member may be constituted by a knife movable upwards and downwards as well as horizontally. Said cutting member is preferably produced in such a way that it is adapted to be put into the fodder and to cut through the fodder both from the left to the right and vice versa. In order to enable the cutting members to be put into the fodder from the upper side, it is important that the superposed cutting members are disposed in such a manner that they are in a staggered position relative to each other in upward and rearward direction while, in a favourable embodiment, the cutting members are disposed so as to extend upwards in an obliquely rearward direction relative to the feeding barrier. Each time after a cut has been made, it will be possible to move the feeding barrier including the cutting members against the fodder, perpendicularly to the direction of cutting, in particular over a distance corresponding to at the most the distance over which the cutting members are disposed in a staggered position relative to each other in upward and rearward direction. The cutting members may furthermore be disposed so as to be movable through the fodder in a reciprocating manner over the entire length of the feeding barrier.

The fodder cut off falls down and has to be brought within the reach of the animals. For that reason, in accordance with the invention, there are provided one or more feed troughs, which are disposed immediately behind the feeding barrier and in which the fodder cut off is collected. The feeding barrier is provided with apertures having such a size that an animal will be able to put its head therethrough into a separate feed trough.

The construction in accordance with the invention may further be provided with an animal identification system comprising a sensor disposed near the feeding barrier, said sensor being connected to at least one feeding computer, and a transponder to be worn by the animal, which transponder cooperates with said sensor. The feeding computer may be programmed in such a manner that for each animal individually the amount of fodder and fodder additives to be dispensed and the desired composition of the fodder additives can be determined. Furthermore there may be provided control means being under the control of the feeding computer for controlling the cutting members for the fodder as well as the supply of fodder additives to the feed troughs.

For a better understanding of the invention, reference will now be made to the accompanying drawings, in which:
Figure 1 shows schematically an arrangement of the shed, in which the shed comprises a silo, a feeding section and a resting section for the animals;
Figure 2 shows schematically a longitudinal cross-section of such a shed;
Figure 3 shows a cross-section of the feeding barrier including cutting members and a silo for fodder additives, and
Figure 4 shows a view of part of the feeding barrier, seen from the feeding section in the shed.

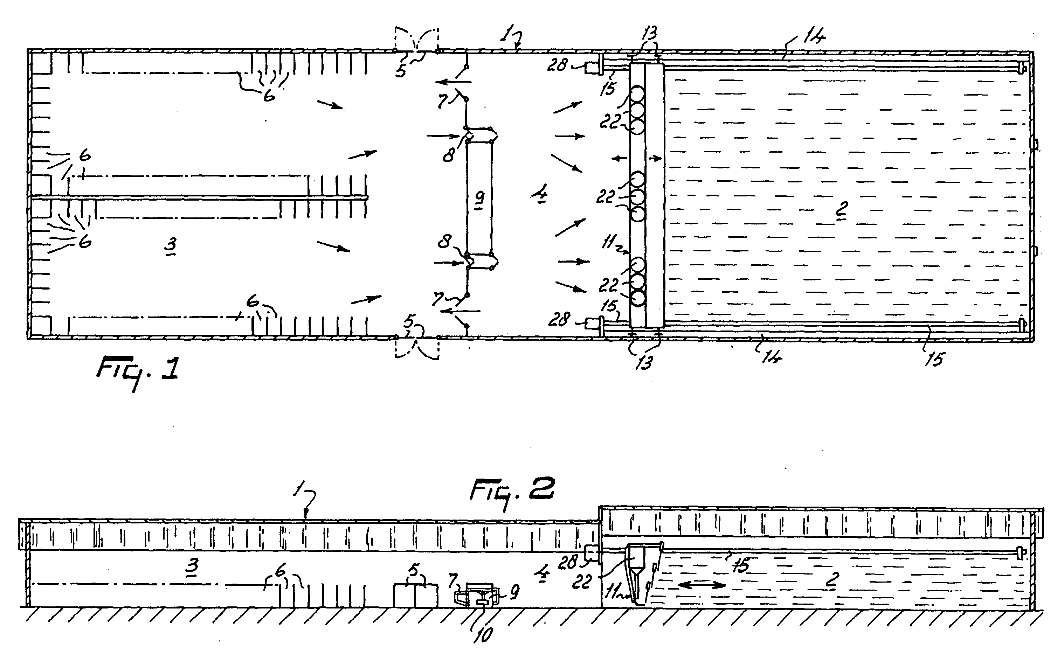

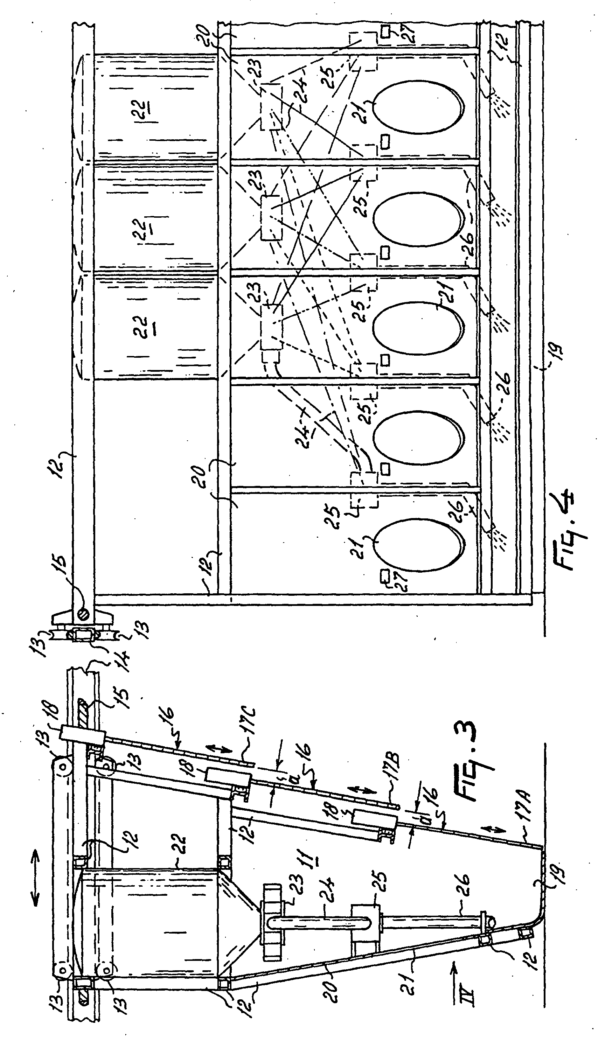

In Figures 1 and 2 the shed is indicated by the reference numeral 1. This shed comprises a silo 2 for fodder, such as cut or chopped fodder, and/or packs of fodder, which may be stacked in said space, as well as a resting section 3 and a feeding section 4 for the animals staying in the shed. The shed 1 is furthermore provided with doors 5 via which the animals may go into the shed or may go from there to the meadow. In the resting section 3 of the shed there are provided a number of cubicles 6; in Figure 1 these are disposed at the longitudinal sides of the outer wall of the shed and in the longitudinal centre thereof as well as at one of the short sides of the shed along the outer wall thereof. The connection between the resting section 3 and the feeding section 4 is constituted by one-way passages 7 and 8. Via the passages 7 the animals can go from the feeding section to the resting section 3. At the boundary of the resting section 3 and the feeding section 4 there is provided a space 9 where one or more milking machines, in particular automatic milking machines including a milking robot 10, may be arranged. Via the passages 8 the animals can go from the resting section to the feeding section. However, under normal circumstances the animals will have to pass first through the space 9, because, prior to being enabled again to take forage in the feeding section, they will first have to be milked in the space 9. From the space 9 they will then be admitted to the feeding section 4. In the silo 2 there is disposed a feeding barrier 11 constituting the partition between the fodder stored in the silo 2 and the feeding section 4 of the shed 1. In the present embodiment, the feeding barrier 11 is movable in the longitudinal direction of the shed. When the silo 2 has entirely been filled with stacked material, the feeding barrier in Figures 1 and 2 will be located as far as possible on the left in the direction of the feeding section 4 of the shed. The more fodder is eaten by the animals, the more the feeding barrier will move further to the right. The feeding barrier will be pushed as much as possible against the stacked fodder. As it will be explained with the aid of Figures 3 and 4, the animals staying in the feeding section 4 will be able to take forage through the feeding barrier 11. When the animals have taken enough forage, they can go to the resting section 3 via the passages 7 in order to ruminate in one of the cubicles 6 in said resting section 3. After some time has elapsed, they will be able to return to the feeding section 4 via the space 9 for the milking machine where they can be milked.

The feeding barrier 11 is constituted by a frame 12 extending in the transverse direction of the shed, which frame 12 is fastened to the two longitudinal sides of the silo 2 by means of roller pairs 13 over a beam 14 so as to be movable through the silo in the longitudinal direction of the shed. The frame 12 is moved through the silo with the aid of drive means constituted by a screw spindle 15 which is driven by means of a step motor 28. By means of said drive means the feeding barrier 11 is movable through the silo in two directions transversely to the longitudinal direction of the feeding barrier.

The feeding barrier 11 is furthermore provided with cutting members 16 for cutting slices of fodder from packs of fodder stacked behind the feeding barrier 11. The cutting members 16 are constituted by knives 17A, 17B and 17C capable of moving upwards and downwards as well as horizontally, which knives are disposed above each other, which is important when the fodder is stacked high. The knives are disposed in such a manner that they are in a staggered position relative to each other in upward and rearward direction, i.e. the knife 17B is active in a plane which is shifted upwards and rearwards over a distance α in the direction of the silo relative to the plane in which the knife 17A is active and the knife 17C is shifted upwards and rearwards over said distance α relative to the cutting member 17B. In the present embodiment, the knives extend upwardly in an obliquely rearward direction. The knives 17A, 17B and 17C can be moved upwards in relevant holders 18, whereafter the entire feeding barrier can be moved backwards over a distance α, whereafter the knife can be put again into the fodder for cutting therein both from the left to the right and vice versa. When a slice of fodder has been cut off in this manner, the knives can be moved upwards and put again into the fodder, so that a second slice can be cut off. The fodder cut off falls into a feed trough 19 from which the animals can take the fodder. For that purpose, the feeding barrier is provided at its front side with plates 20 in which, in the present embodiment, there are provided oval apertures 21 through which the animals can put their heads in order to take forage from the feed trough 19 disposed therebehind. In the present embodiment, there are arranged on the feeding barrier 11 a number of silos for fodder additives to be added to the fodder. In Figure 1 three times three suchlike silos 22 are arranged, which silos are intended for three different kinds of fodder additives. These fodder additives may consist of concentrate, such as biks, and minerals, vitamins, etc. Via metering elements 23 and connecting tubes or hoses 24 these fodder additives are supplied to a mixing element 25 from which the fodder additives in the desired composition are supplied via the tube 26 to the fodder present in the feed trough 19.

In a preferred embodiment, there are furthermore provided separate feed troughs 19 behind the apertures 21, so that it will be possible to give each animal the right amount of forage in the right composition and with the right additives. However, for that purpose it must be known which animal has put its head through which aperture 21. For that reason there is provided a non-shown animal identification system comprising a sensor 27 disposed near the feeding barrier, said sensor being connected to at least one feeding computer, and a transponder to be worn by an animal, which transponder cooperates with said sensor 27. In principle, near each aperture 21 there will be disposed such a sensor 27. After an animal has put its head through an aperture 21 and has been identified by means of the animal identification system, a file present in the feeding computer will be activated, with the aid of which file the right amount of forage in the right composition will be given to the animal. In other words, the control means for the knives for cutting off fodder and for the supply of the fodder additives to the feed trough are controlled from the (non-shown) feeding computer.

By making use of a construction as described it will be possible to realize a method of making forage, in which method crop is pressed into bales in the field, whereafter the bales are stacked in the silo 2 and fodder is automatically cut therefrom by means of cutting members 16, whereafter fodder additives are automatically supplied from the silos 22. By making use moreover of an animal identification system, it will be possible to cut off each time an amount of fodder attuned to the individual animals and to add thereto an amount of fodder additives in a desired composition, said amount being attuned to the individual animal. Each time after an amount of fodder has been cut off, the feeding barrier 11 through which the animals can put their heads to take forage will be moved against the stacked fodder. After the animals have taken forage through the feeding barrier 11 in the feeding section 3, they can go to the resting section 3, whereafter they will go again to the feeding section 4 via the milk box 9 in which the milking machine is arranged.

The invention is not restricted to the above-described embodiment, but also relates to all modifications thereof, of course being within the scope of the terms of the following claims.

In this connection it is noticed that also silage can be applied in the silo in a favourable manner, said silage having been chopped or having been cut already in the field.

## Claims

1. A construction for milking animals, such as cows, said construction including at least one milking machine, **characterized in that** there is provided a feeding barrier (11) which is movably disposed in such a manner that, through said feeding barrier (11), the animals can take fodder, one or more silos (22) for fodder additives being arranged on the feeding barrier (11) or near thereto for adding additives to the fodder.

2. A construction as claimed in claim 1, **characterized in that** there are provided several silos (22) for different fodder additives.

3. A construction as claimed in claim 1 or 2, **characterized in that** the fodder additives may consist of concentrate, such as biks, and/or minerals and/or vitamins, etc.

4. A construction as claimed in any one of claims 1 to 3, **characterized in that** there is provided a mixing element (25), connected to one or several silos (22) for fodder additives and disposed on the feeding barrier (11), for adding different kinds of fodder additives in specific amounts and in a desired mutual proportion to the fodder.

5. A construction as claimed in any one of claims 1 to 4, **characterized in that** the fodder additives are added to the fodder in one or more feed troughs (19) disposed behind the feeding barrier (11).

6. A construction as claimed in any one of the preceding claims, **characterized in that** there is provided an animal identification system comprising a sensor (27) disposed near the feeding barrier (11), said sensor (27) being connected to at least one feeding computer, and a transponder to be worn by an animal, which transponder cooperates with said sensor (27).

7. A construction as claimed in claim 6, **characterized in that** the feeding computer is programmed in such a manner that for each animal individually the amount of fodder and fodder additives to be dispensed and the desired composition of the fodder additives are determined.

8. A construction as claimed in claim 7, **characterized in that** there are provided control means being under the control of the feeding computer for controlling both the cutting members (16) for the fodder and the supply of fodder additives to the feed troughs (19).

9. A construction as claimed in any one of the preceding claims, **characterized in that** the construction comprises a silo (2) for fodder, such as silage, said silo (2) constituting part of the shed (1).

10. A construction as claimed in any one of the preceding claims, **characterized in that** the shed (1) for the animals comprises a feeding section (4) adjacent to the silo (2), from which feeding section (4) the animals can take fodder.

11. A construction as claimed in any one of the preceding claims, **characterized in that** the shed (1) for the animals comprises a resting section (3) provided with cubicles (6) and a feeding section (4) which is accessible for the animals from the resting section (3) via a milk box (9) in which the milking machine, in particular an automatic milking machine including a milking robot (10), is arranged.

12. A construction as claimed in any one of the preceding claims, **characterized in that** the shed (1) for the animals comprises a resting section (3) and a feeding section (4), one section being accessible for the animals from the other section via one or more one-way passages (7, 8).

13. A construction as claimed in any one of the preceding claims, **characterized in that** the feeding barrier (11) is provided with drive means for moving same in two opposite directions, transversely to the longitudinal direction of the feeding barrier (11).

14. A construction as claimed in any one of the preceding claims, **characterized in that** there are provided one or more feed troughs (19), which are disposed immediately behind the feeding barrier (11) and in which fodder cut off, such as silage, is collected.

15. A construction as claimed in any one of the preceding claims, **characterized in that** the feeding barrier (11) is provided with apertures (21) through which an animal can put its head into a feed trough (19) disposed therebehind.

## Patentansprüche

1. Vorrichtung zum Melken von Tieren, wie z. B. Kühen, wobei die Vorrichtung mindestens eine Melkmaschine enthält,
**dadurch gekennzeichnet, daß** ein Futtergitter (11) vorhanden ist, das in der Weise beweglich angeordnet ist, daß die Tiere durch das Futtergitter (11) Futter aufnehmen können, wobei ein oder mehrere Silos (22) für Futterzusatzstoffe an dem Futtergitter (11) oder nahe demselben angeordnet sind, um dem Futter Zusatzstoffe zuzusetzen.

2. Vorrichtung nach Anspruch 1,
**dadurch gekennzeichnet, daß** mehrere Silos (22) für unterschiedliche Futterzusatzstoffe vorhanden sind.

3. Vorrichtung nach Anspruch 1 oder 2,
**dadurch gekennzeichnet, daß** die Futterzusatzstoffe aus Kraftfutter, wie z. B. Kraftfutterpellets, und/oder Mineralien und/oder Vitaminen usw. bestehen können.

4. Vorrichtung nach einem der Ansprüche 1 bis 3,
**dadurch gekennzeichnet, daß** ein Mischelement (25) vorhanden ist, das mit einem oder mehreren Silos (22) für Futterzusatzstoffe verbunden und an dem Futtergitter (11) angebracht ist, um dem Futter unterschiedliche Arten von Futterzusatzstoffen in bestimmten Mengen und in einem gewünschten Verhältnis zueinander zuzusetzen.

5. Vorrichtung nach einem der Ansprüche 1 bis 4,
**dadurch gekennzeichnet, daß** die Futterzusatzstoffe dem Futter in einem oder mehreren Futtertrögen (19) zugesetzt werden, die hinter dem Futtergitter (11) angeordnet sind.

6. Vorrichtung nach einem der vorhergehenden Ansprüche,
**dadurch gekennzeichnet, daß** ein Tieridentifikationssystem vorhanden ist, das einen Sensor (27) umfaßt, der nahe dem Futtergitter (11) angeordnet ist, wobei der Sensor (27) mit mindestens einem Fütterungscomputer verbunden ist, sowie einen von einem Tier zu tragenden Transponder umfaßt, der mit dem Sensor (27) zusammenwirkt.

7. Vorrichtung nach Anspruch 6,
**dadurch gekennzeichnet, daß** der Fütterungscomputer derart programmiert ist, daß die zuzuteilende Menge an Futter und Futterzusatzstoffen und die gewünschte Zusammensetzung der Futterzusatzstoffe für jedes Tier einzeln festgelegt wird.

8. Vorrichtung nach Anspruch 7,
**dadurch gekennzeichnet, daß** eine von dem Fütterungscomputer gesteuerte Steuerung vorhanden ist, um sowohl die Schneidglieder (16) für das Futter als auch die Zufuhr von Futterzusatzstoffen zu den Futtertrögen (19) zu steuern.

9. Vorrichtung nach einem der vorhergehenden Ansprüche,
**dadurch gekennzeichnet, daß** die Vorrichtung einen Silo (2) für Futter, wie z. B. Silage, umfaßt, wobei der Silo (2) Teil des Stalles (1) ist.

10. Vorrichtung nach einem der vorhergehenden Ansprüche,
**dadurch gekennzeichnet, daß** der Stall (1) für die Tiere einen an den Silo (2) angrenzenden Fütterungsbereich (4) umfaßt, wobei die Tiere aus dem Fütterungsbereich (4) Futter aufnehmen können.

11. Vorrichtung nach einem der vorhergehenden Ansprüche,
**dadurch gekennzeichnet, daß** der Stall (1) für die Tiere einen Ruhebereich (3) umfaßt, der mit Boxen (6) versehen ist, und einen Fütterungsbereich (4), der für die Tiere vom Ruhebereich (3) aus über eine Melkbox (9) zugänglich ist, in der die Melkmaschine, insbesondere eine automatische Melkmaschine mit einem Melkroboter (10), angeordnet ist.

12. Vorrichtung nach einem der vorhergehenden Ansprüche,
**dadurch gekennzeichnet, daß** der Stall (1) für die Tiere einen Ruhebereich (3) und einen Fütterungsbereich (4) umfaßt, wobei der eine Bereich für die Tiere vom anderen Bereich aus über einen oder mehrere Einwegdurchgänge (7, 8) zugänglich ist.

13. Vorrichtung nach einem der vorhergehenden Ansprüche,
**dadurch gekennzeichnet, daß** das Futtergitter (11) mit einer Antriebsvorrichtung versehen ist, um es quer zur Längsrichtung des Futtergitters (11) in zwei entgegengesetzte Richtungen zu bewegen.

14. Vorrichtung nach einem der vorhergehenden Ansprüche,
**dadurch gekennzeichnet, daß** ein oder mehrere Futtertröge (19) vorhanden sind, die unmittelbar hinter dem Futtergitter (11) angeordnet sind, und von denen abgeschnittenes Futter, wie z. B. Silage, aufgenommen wird.

15. Vorrichtung nach einem der vorhergehenden Ansprüche,
**dadurch gekennzeichnet, daß** das Futtergitter (11) mit öffnungen (21) versehen ist, durch die ein Tier seinen Kopf in einen dahinter angeordneten Futtertrog (19) stecken kann.

## Revendications

1. Installation pour la traite d'animaux, tels que des vaches, ladite installation comportant au moins une machine de traite, **caractérisée en ce qu'**une barrière d'alimentation (11) est fournie, qui est disposée de manière mobile d'une manière telle que, à travers la barrière d'alimentation (11), les animaux peuvent prendre du fourrage, un ou plusieurs silos (22) destinés à des additifs de fourrage étant agencés sur la barrière d'alimentation (11), ou à proximité de celle-ci, pour ajouter des additifs au fourrage.

2. Installation selon la revendication 1, **caractérisée en ce que** plusieurs silos (22) sont fournis pour différents additifs de fourrage.

3. Installation selon la revendication 1 ou 2, **caractérisée en ce que** les additifs de fourrage peuvent être constitués de concentrés tels que des "biks" et/ou des minéraux et/ou des vitamines, etc.

4. Installation selon l'une quelconque des revendications 1 à 3, **caractérisée en ce qu'**un élément de mélange (25) est fourni, connecté à un ou plusieurs silos (22) d'additifs de fourrage, et disposé sur la barrière d'alimentation (11), afin d'ajouter différents types d'additifs de fourrage au fourrage, en quantités spécifiques et dans une proportion mutuelle voulue.

5. Installation selon l'une quelconque des revendications 1 à 4, **caractérisée en ce que** les additifs de fourrage sont ajoutés au fourrage dans une ou plusieurs auges d'alimentation (19) disposées derrière la barrière d'alimentation (11).

6. Installation selon l'une quelconque des revendications précédentes, **caractérisée en ce qu'**un système d'identification d'animal est fourni, comportant un capteur (27) disposé à proximité de la barrière d'alimentation (11), ledit capteur (27) étant connecté à au moins un ordinateur d'alimentation, et un transpondeur devant être porté par un animal, transpondeur qui coopère avec ledit capteur (27).

7. Installation selon la revendication 6, **caractérisée en ce que** l'ordinateur d'alimentation est programmé d'une manière telle que pour chaque animal, individuellement, la quantité de fourrage et d'additifs de fourrage devant être distribuée et la composition voulue des additifs de fourrage sont déterminées.

8. Installation selon la revendication 7, **caractérisée en ce que** des moyens de commande sont fournis, qui sont sous la commande de l'ordinateur d'alimentation pour commander à la fois les éléments de coupe (16) du fourrage et l'alimentation des additifs de fourrage vers les auges d'alimentation (19).

9. Installation selon l'une quelconque des revendications précédentes, **caractérisée en ce que** l'installation comporte un silo (2) destiné à du fourrage, tel que du fourrage ensilé, ledit silo (2) constituant une partie du hangar (1).

10. Installation selon l'une quelconque des revendications précédentes, **caractérisée en ce que** le hangar (1) destiné aux animaux comporte une section d'alimentation (4) adjacente au silo (2), section d'alimentation (4) à partir de laquelle les animaux peuvent prendre du fourrage.

11. Installation selon l'une quelconque des revendications précédentes, **caractérisée en ce que** le hangar (1) destiné aux animaux comporte une section de repos (3) munie de compartiments (6), et une section d'alimentation (4) qui est accessible aux animaux à partir de la section de repos (3) via un box de traite (9) dans lequel est agencée la machine de traite, en particulier une machine de traite automatique comportant un robot de traite (10).

12. Installation selon l'une quelconque des revendications précédentes, **caractérisée en ce que** le hangar (1) destiné aux animaux comporte une section de repos (3) et une section d'alimentation (4), une première section étant accessible aux animaux à partir de l'autre section via un ou plusieurs passages unidirectionnels (7, 8).

13. Installation selon l'une quelconque des revendications précédentes, **caractérisée en ce que** la barrière d'alimentation (11) est munie de moyens d'entraînement pour déplacer celle-ci en deux directions opposées, transversalement à la direction longitudinale de la barrière d'alimentation (11).

14. Installation selon l'une quelconque des revendications précédentes, **caractérisée en ce que** une ou plusieurs auges d'alimentation (19) sont fournies, qui sont disposées immédiatement derrière la barrière d'alimentation (11), et dans lesquelles est récupéré du fourrage coupé, tel que du fourrage ensilé.

15. Installation selon l'une quelconque des revendications précédentes, **caractérisée en ce que** la barrière d'alimentation (11) est munie d'ouvertures (21) à travers lesquelles un animal peut mettre sa tête dans une auge d'alimentation (19) disposée derrière celles-ci.
